# EUROPÄISCHE PATENTSCHRIFT

(11) **EP 3 442 336 B1**
(45) Veröffentlichungstag und Bekanntmachung des Hinweises auf die Patenterteilung: **17.08.2022**
(21) Anmeldenummer: 17724312.8
(22) Anmeldetag: 11.04.2017
(51) Int. Cl.: A01N 43/16, A01N 59/20, A01P 3/00, A01N 25/22

(54) **FUNGIZIDES UND/ODER BAKTERIZIDES PFLANZENSCHUTZMITTEL**
FUNGICIDAL AND/OR BACTERICIDAL PLANT PROTECTION AGENT
PRODUIT PHYTOSANITAIRE FONGICIDE ET/OU BACTÉRICIDE

(30) Priorität: 15.04.2016 DE 102016004627
(43) Veröffentlichungstag der Anmeldung: 20.02.2019
(73) Patentinhaber: Spiess-Urania Chemicals GmbH, 20097 Hamburg (DE)
(72) Erfinder: TESNAU, Alexander, 23701 Eutin (DE); NANNEN, David, 24116 Kiel (DE); RAMM HINRICH, Jan, "verstorben" (DE)
(74) Vertreter: Klickow & Wetzel PartGmbB
(86) Internationale Anmeldenummer: PCT/DE2017/000105
(87) Internationale Veröffentlichungsnummer: WO 2017/178000

(56) Entgegenhaltungen:
- EP-A2- 2 320 730
- WO-A1-2006/028853
- WO-A1-2014/064119
- WO-A2-00/32041
- DE-T2- 69 123 688

## Beschreibung

### A) Patentbeschreibung

Die Erfindung betrifft ein Fungizid und/oder Bakterizid für den Einsatz beispielsweise in Getreide, Kernobst, Wein, Olive, Zitrus, Kaffee, Kakao, Gemüse und Nachtschattengewächse, sowie allen anderen Kulturen in der in Anlage 1 genannten Übersicht, dessen Verwendung im Schutz von Kulturpflanzen vor Pilz- und/oder Bakterienbefall sowie ein Verfahren zur Kultivierung einer Kulturpflanze auf einer Kulturfläche besteht.

Darüberhinaus betrifft die Erfindung ein kupferhaltiges Fungizid und/oder Bakterizid, dessen Verwendung zu einer Reduktion der Umweltbelastung führt und somit einen mittelbaren und unmittelbaren gesellschaftlichen Nutzen darstellt. Insbesondere betrifft die Erfindung ein Fungizid/Bakterizid, das im Vergleich zu existierenden kupferhaltigen Produkten bei reduziertem Kupfer-Eintrag in die Umwelt eine gleichbleibende Befallsminderung/Befallskontrolle erwirkt oder bei gleicher Kupfereinsatzmenge eine verbesserte Befallskontrolle erwirkt.

Bevorzugt betrifft die Erfindung die besondere Kombination der Einzelkomponenten in einer applikationsfähigen Formulierung, wodurch die zuvor genannten Einsatzgebiete und Verbesserungen ermöglicht und optimiert werden.

Aus der WO 00/32041 sind bereits Zusammensetzungen bekannt, die Chitosan und Kupferkomplexe zur Behandlung von Pflanzen gegen mikrobiellen Befall enthalten.

In der EP 2 320 730 werden synergistische Gemische beschrieben, die teilweise depolymerisiertes Chitosan und Kupfer enthalten und die sich zur Behandlung von Oidiuminfektionen eignen.

In der DE 691 23 688 werden Formulierungen beschrieben, die als Dispersionen realisiert sind und die Kupferverbindungen enthalten sowie zur Behandlung bzw. zum Schutz von Pflanzen verwendbar sind, insbesondere gegenüber von Erkrankungen der Pflanzen durch Bakterien oder Pilze.

Die WO 2014/064119 beschreibt synergistisch wirksame Gemische die Chitosan und ein anorganisches Fungizid enthalten. Die Gemische dienen zur Behandlung bzw. zum Schutz von Pflanzen gegenüber von Pilzbefall.

In der WO 2006/028853 wird ein mit Phosphat stabilisiertes Kupferhydroxid beschrieben

### B) Begriffserklärungen

Die in der vorliegenden Patentschrift verwendeten Begrifflichkeiten sind wie folgt zu verstehen:
Unter einem "Fungizid" und/oder "Bakterizid" wird hier ein Pflanzenschutzmittel verstanden, bestehend aus oder umfassend eine Verbindung oder eine Zusammensetzung von Verbindungen mit antifungaler und oder bakterizider Wirkung. Insbesondere wird in diesem Falle hierunter ein Mittel verstanden, das hinsichtlich mindestens einer Anwendung eine pilzliche und/oder eine bakterielle Infektion einer Pflanze verhindert und/oder das Wachstum von Pilzen/Bakterien und/oder von Pilzsporen in und/oder auf der Pflanze verhindert oder hemmt. Der Begriff bezieht sich nicht nur auf den antifungalen/antibakteriellen Wirkstoff selbst, sondern umfasst auch die besondere Zusammensetzung des Mittels, im Folgenden auch Formulierung genannt, und die Herstellungsprozedur.

Wenn hier von einem Schutz von Pflanzen vor Pilzbefall und/oder Bakterienbefall gesprochen wird, ist damit ein Schutz durch fungizide/bakterizide Wirkung einer Verbindung, Zusammensetzung, Zubereitung, Formulierung oder dergleichen gemeint, der Teilphasen oder sämtliche Phasen einer Pilz- bzw. Bakterieninfektion umfassen kann, beispielsweise den Schutz vor einer initialen Pilzinfektion, das Auskeimen von Pilzsporen, das Wachstum des infizierenden Pilzes und die Ausbreitung auf oder in der Pflanze. Im Falle einer bakteriellen Infektion umfasst der Schutz die initiale Bakterieninfektion, und die Ausbreitung des Bakteriums in der Pflanze. Vorzugsweise umfasst der Ausdruck hier einen Schutz, der die Phasen von der Infektion bis vor Ausbruch der jeweiligen Symptome umfasst, d.h. einen Schutz mit protektivem und/oder kurativem, nicht jedoch mit eradikativem Charakter.

Unter einem "protektiven Schutz" oder einer "protektiven Wirkung" in Bezug auf ein Fungizid/Bakterizid wird hier verstanden, dass die Infektion durch den Pilz bzw. das Bakterium oder zumindest dessen weitere Ausbreitung auf oder in der Pflanze oder Teilen davon präventiv von Anfang an verhindert bzw. gehemmt wird. Hierzu muss sich das Fungizid/Bakterizid bereits in der Pflanze und/oder auf Pflanzenoberflachen befinden, bevor der Pilz bzw. das Bakterium die Pflanze befällt.

Unter einer Formulierung wird die Zusammensetzung des Produktes unter Beinhaltung aller eingesetzten Komponenten verstanden. Die Formlierung kann in unterschiedlichen Formulierungstypen vorliegen wie Suspensionskonzentrat, benetzbares Pulver, wasserdispergierbares Granulat, Dispersion in Öl oder einer Suspoemulsion wie im Folgenden beschrieben:
Unter einem "Suspensionskonzentrat" wird eine stabile Suspension eines oder mehrerer Wirkstoffe und anderer Hilfsstoffe in einer kontinuierlichen wässrigen Phase verstanden. Diese können in einer direkten Applikation (SD: Suspensionskonzentrat für direkte Applikation) oder nach einer Verdünnung mit Wasser (SC: Suspensionskonzentrat beabsichtigt zur Verdünnung mit Wasser) angewendet werden. Weiterhin wird auch der Anwendungsbereich zur Saatgutbehandlung eingeschlossen (FS: Suspension für die Anwendung auf Saatgut entweder direkt oder nach Verdünnung mit Wasser).

Unter einem "benetzbarem Pulver" (WP: wettable powder; WP-Formulierung ), wird ein versprühbares feines Pulver zusammengesetzt aus einem oder mehrerer Wirkstoffe sowie unterschiedlicher Hilfsstoffe verstanden. Das benetzbare Pulver wird vor der Anwendung mit Wasser oder einer wässrigen Lösung suspendiert (WP) und mit geeigneten Sprühvorrichtungen aufgebracht. Auch die Anwendung zur Saatgutbehandlung (WS: benetzbares Pulver zur Anwendung auf Saatgut als konzentrierte Suspension) ist möglich.

Unter einem "wasserdispergierbaren Granulat (WG: wasserdispergierbares Granulat; WG-Formulierung) werden Granulate zusammengesetzt aus einem oder mehrerer Wirkstoffe sowie unterschiedlicher Hilfsstoffe verstanden. Die Granulate werden in Wasser oder wässriger Lösung dispergiert und bilden im Spritztank eine Suspension.

Unter einer Dispersion in Öl (OD: Öldispersion; OD-Formulierung) wird eine stabile Suspension aus einem oder mehrerer Wirkstoffe und unterschiedlicher Hilfsstoffe in einem in Wasser unlöslichem Öl verstanden. Es ist beabsichtigt die OD-Formulierung nach einer Verdünnung mit Wasser über geeignete Sprühvorrichtungen anzuwenden.

Unter einer Suspemulsion (SE: Suspo-emulsion; SE-Formulierung) versteht man eine heterogene Formulierung, die aus einem Anteil einer stabilen wässrigen Dispersion und einem Anteil an emulgierten mit wasser nicht mischbaren Bestandteilen besteht.

Die hier beschriebene Fertigformulierung muss lediglich zur Anwendung in eine dem Pflanzenbestand angepassten Wassermenge gegeben werden, um dann nach Applikation auf den Pflanzenbestand eine ausreichende Wirkung zu entfalten. Das gleiche gilt für den 2-Komponenten-Pack. Dies ist im Pflanzenschutzbereich eine gängige Praxis.

Wenn hier ein Zahlenbereich angegeben ist, schließt dies auch jeden Einzelwert oder jeden kleineren Bereich innerhalb des Zahlenbereiches ein, auch wenn dieser nicht ausdrücklich genannt ist. Beispielsweise schließt ein Zahlenbereich von 15-25 auch Einzelwerte von beispielsweise 16, 18, 24 oder 23,5 oder einen Zahlenbereich von 15-22, 18-25, 22-24 oder 21,5-23,5 ein.

Wenn hier in Rezepturen oder Zusammensetzungen Prozentgehalte ohne weitere Beschreibung angegeben werden, so ist stets der Gehalt in Gewichtsprozent bzw. Masseanteil (w/w) gemeint. Das erfindungsgemäße Verfahren umfasst das Applizieren eines erfindungsgemäßen Fungizids und/oder Bakterizids auf die Kulturpflanze und/oder die Kulturfläche in einer Menge, die wirksam ist, um den Pilzbefall und/oder Bakterienbefall der Kulturpflanze zu verhindern oder im Vergleich zu einer unbehandelten Kulturpflanze zu vermindern. Der Bezug auf eine Menge, die wirksam ist, um den "Pilzbefall und/oder Bakterienbefall einer Kulturpflanze im Vergleich zu einer unbehandelten Kulturpflanze zu vermindern", bezieht sich auf eine Menge des erfindungsgemäßen Fungizids und/oder Bakterizids, deren Applikation bei einer Kulturpflanzenpopulation dazu führt, dass diese im Vergleich zu einer unbehandelten, d.h. nicht mit einem Fungizid und/oder Bakterizid behandelten, ansonsten aber unter vergleichbaren Bedingungen angezogenen Population derselben Kulturpflanze im Durchschnitt einen verminderten Pilzbefall und/oder Bakterienbefall aufweist.

Die Begriffe "antifungal" und "fungizid", bzw "antibakteriell" und "bakterizid" werden hier in Bezug auf die antipilzliche/antibakterielle Wirkung einer Verbindung, Verbindungszusammensetzung, Zubereitung, Formulierung oder dergleichen synonym verwendet, sofern nicht ausdrücklich etwas anderes angegeben ist oder sich aus dem Zusammenhang ergibt.

Unter "Blattseptoria" wird hier eine durch den Pilz Septoria tritici (Mycosphaerella graminicola, Zymoseptoria tritici), unter "Schorf" eine beispielsweise durch den Pilz Venturia inaequalis und Venturia pyrina, unter "Falscher Mehltau an Wein" eine durch Plasmopara viticola, unter "Falscher Mehltau an Nachtschattengewächse" eine durch den Pilz Phythophthora infestans hervorgerufene pflanzliche Erkrankung verstanden. Alle anderen relevanten durch Pilze und/oder Bakterien hervorgerufene Krankheiten sind den jeweiligen Wirt-Pathogen-Paarungen gemäß Anlage 1 zu entnehmen.

Unter "Getreide" werden Pflanzen der Familie der Süßgräser (Poaceae, früher Gramineae), insbesondere solche, die wegen ihrer Körnerfrüchte kultiviert werden, oder deren Körnerfrüchte selbst verstanden. Auch Hybride aus verschiedenen Gattungen wie beispielsweise Triticale fallen unter den Begriff. Wichtige Getreidepflanzen sind Pflanzen der Gattungen Triticum (Weizen), Secale (Roggen), Hordeum (Gerste), Oryza (Reis), Zea (Mais), Avena (Hafer) sowie Sorghum, Panicum, Pennisetum, Setaria, Eleusine, Eragrostis etc. (Hirse). Beispiele für Getreide sind Winter- und Sommerweizen, Winter- und Sommergerste, Winter und Sommerroggen, Winter- und Sommertriticale, Winter- und Sommerhafer, Hartweizen (Triticum durum), Dinkel (Triticum aestivum subsp. spelta) und Emmer (Triticum dicoccum).

Unter "Kernobst" werden Pflanzen des Untertribus der Kernobstgewächse (Pyrinae), insbesondere solche, die wegen ihrer Früchte kultiviert werden, verstanden. Dies umfasst insbesondere Apfel, Birne und Quitte.

Unter "Wein" werden Pflanzen der Gattung Weinrebe (Vitis), insbesondere solche, die wegen ihrer Früchte kultiviert werden, verstanden.

Unter "Olive" werden Pflanzen der Gattung Ölbäume (Olea), insbesondere solche, die wegen ihrer Früchte kultiviert werden, verstanden.

Unter "Zitrus" werden Pflanzen der Gattung Zitruspflanzen (Citrus), insbesondere solche, die wegen ihrer Früchte kultiviert werden, verstanden.

Unter Kaffee werden Pflanzen der Gattung Kaffee (Coffea), insbesondere solche, die wegen ihrer Früchte kultiviert werden, verstanden.

Unter Kakao werden Pflanzen der Gattung Kakaobäume (Theobroma), insbesondere solche, die wegen ihrer Früchte kultiviert werden, verstanden.

Unter Gemüse werden Pflanzen, insbesondere solche, die wegen ihrer Früchte kultiviert werden, verstanden. Diese können in der deutschen Sprache unter "Fruchtgemüse" zusammengefasst werden und umfassen eine Vielzahl von botanischen Familien und Gattungen. Darüberhinaus umfasst der Begriff "Gemüse" diejenigen Pflanzen, deren Organe (Blatt, Stengel, Wurzel) für den menschlichen Verzehr geeignet sind und je nach Kulturkreis auf verschiedenste Art in den jeweilgen Ernährungsarten Verwendung finden.

Unter "Nachtschattengewächse" werden Pflanzen der Familie Nachtschattengewächse (Solanaceae) verstanden, insbesondere solche, die wegen ihrer Knollen und Früchte kultiviert werden.

Unter dem Begriff "Kulturpflanze" oder "Nutzpflanze" werden Pflanzen verstanden, die durch menschliche Auslese oder Züchtung aus Wildpflanzen hervorgegangen sind und vom Menschen planmäßig kultiviert und erhalten werden. Kulturpflanzen unterscheiden sich von den Wildpflanzen, aus denen sie hervorgegangen sind, durch genetische und/oder morphologische Merkmale. Zu den Kulturpflanzen zählen Nahrungspflanzen wie beispielsweise Gemüse-, Obst-, Öl-, Getreide- und Gewürzpflanzen, aber auch auch Zierpflanzen, Industriepflanzen (z.B. Faserpflanzen oder als nachwachsende Rohstoffe angebaute Pflanzen) und Futterpflanzen.

Mit "Chitosan" (CAS 9012-76-4, z.B. auch bezeichnet als Polyglucosamin, Poly-D-Glucosamin, Deacetylchitin; abgekürzt auch "CS") wird ein lineares Copolymer aus zufällig verteilten β-1,4-glykosidisch verknüpften N-Acetylglucosamin- (GIcNAc-, 2-Acetamido-2-desoxy-β-D-glukopyranose-) und D-Glucosamin- (GIcN-, 2-Amino-2-desoxy-β-D-glukopyranose-) Monomeren bezeichnet, welches je nach Zusammensetzung auch fungizide und/oder bakterizide Wirkung haben kann. N-Acetylglucosamin unterscheidet sich vom D-Glucosamin durch die Acetamidogruppe anstelle der Aminogruppe am C2 des Pyranoserings. Chitosan kann durch Deacetylierung aus Chitin, einem überwiegend aus β-1,4-glykosidisch verknüpften Acetylglucosamin-Monomeren aufgebauten Biopolymer, hergestellt und davon abgeleitet werden. Der Polymerisierungsgrad, d.h. die Kettenlänge, kann stark variieren ("degree of polymerisation", DP). Da auch beim Chitin ein Teil der N-Acetylglucosamin-Monomere deacetyliert sein kann, wird zur Unterscheidung zwischen Chitosan und Chitin der Acetylierungsgrad ("degree of acetylation", DA) herangezogen, wobei in der Regel bei einem Acetylierungsgrad ≥ 50% von Chitin, bei einem Acetylierungsgrad < 50% von Chitosan gesprochen wird. Auch hier wird der Begriff "Chitosan" in Zusammenhang mit einem statischen Copolymer aus GIcNAc- und GIcN-Monomeren bei einem Acetylierungsgrad von < 50% verwendet.

Unter dem Begriff "Acetylierungsgrad" (DA) ist der Anteil, beispielsweise ausgedrückt in Prozent, acetylierter Monomere an den Monomeren im Chitosan-Polymer zu verstehen. Ein DA von 20% bedeutet daher beispielsweise, dass 20% der Monomere im Chitosan acetyliert sind, also GIcNAc-Monomere sind, während die übrigen Monomere deacetyliert sind, d.h. GIcN-Monomere sind. Der Acetylierungsgrad kann mittels verschiedener Verfahren, beispielsweise mittels NMR, ermittelt werden (s. z.B. M.R. Kasaai 2009, Various Methods for Determination of the Degree of N-Acetylation of Chitin and Chitosan: A Review, Journal of Agricultural and Food Chemistry 57 (5), 1667-1676, DOI: 10.1021/jf803001m).

Unter dem Begriff "Polymerisierungsgrad" ("degree of polymerisation", DP) wird die Kettenlänge eines Polymers verstanden, beispielsweise ausgedrückt als die Anzahl der Monomere eines Polymers. Wenn hier der Begriff "Polymerisierungsgrad" verwendet wird, ist damit, sofern nicht etwas anderes angegeben ist oder sich aus dem Zusammenhang ergibt, der (zahlen)mittlere Polymerisierungsgrad ("number-average degree of polymerisation", DPn) gemeint, der sich aus unterschiedlichen Polymeren ergibt. Der Polymerisierungsgrad kann beispielsweise mittels NMR ermittelt werden (s. z.B. Kumirska et al, 2010: Application of Spectroscopic Methods for Structural Analysis ofChtin and Chitosan. Marine Drugs 2010, 8, 1567-1636; doi: 10.3390/md8051567*.)* Bei Chitosanen mit einem DP von <1000 ist eine teilweise fungizide Wirkung vorhanden.

Unter dem Begriff unlösliches Kupfersalz wird hier ein in Wasser nur schwer lösliches Kupfersalz verstanden.

Als fein dispergierbare Partikel werden hier Partikel bezeichnet, die für den Fachmann unter zu Hilfenahme üblicher Dispergiermittel eine entsprechende Suspension bilden können. Weiterhin werden damit Partikel bezeichnet deren mittlere Partikelgröße üblicherweise im einstelligen bis niedrigen zweistelligen µm Bereich liegt, wobei üblicherweise nicht mehr als 90 % der Partikel größer als 60 µm sein sollen.

### C) Einleitung Patent

Fungizide haben insbesondere als Pflanzenschutzmittel, nach wie vor eine elementare Bedeutung in der landwirtschaftlichen Produktion hinsichtlich Ertrags- und Qualitätssicherung. Insbesondere Getreidefrüchte und Nachtschattengewächse müssen aufgrund ihrer fundamentalen Rolle als Nahrungsmittel zur Ernährung einer wachsenden Weltbevölkerung oder auch als Viehfutter möglichst umfassend und zuverlässig vor Ernteverlusten durch Befall mit Schadpathogenen, beispielsweise Pilzen und Bakterien, geschützt werden. Gleichzeitig besteht der Anspruch, Umweltbelastungen (Verordnung EG Nr 1107/2009) sowie unerwünschte Resistenzbildungen bei den Schadorganismen durch den Einsatz von Fungiziden möglichst gering zu halten. Hierfür sind innovative Lösungen für die Optimierung von bereits bekannten Fungiziden anzustreben.

Untersuchungen in in-vitro Systemen und im Freiland haben gezeigt, dass eine einfache kombinierte Ausbringung zweier Komponenten als Tankmischung zum Schutz von Pflanzen nicht immer möglich ist, sondern zu negativen Interaktionen beider Komponenten führt, welche zu einer verminderten Wirksamkeit führen (Nechwatal & Zellner, 2015: Neue Ansätze zur Bekämpfung der Kraut- und Knollenfäule (Phytophthora infestans) im ökologischen Kartoffelbau. Schriftenreihe der Bayrischen Landesanstalt für Landwirtschaft. ISSN 1611-4159).

### D) Detailierte Patentbeschreibung

In der vorliegenden Erfindung wird ein solches Mittel beschrieben, wobei die Aufgabe darin besteht, eine gute Wirkung bei gleichzeitiger guter Handhabung zu erreichen. Unter diesen Bedingungen wird die neuartige Kombination zweier Einzelverbindungen beschrieben, die in einer Formulierung kombiniert werden können.

Diese Aufgabe wird durch die Merkmalskombination von Patentanspruch 1 gelöst. Insbesondere wird ein Fungizid und/oder Bakterizid verwendet, welches Chitosan und mindestens ein Kupfersalz umfasst und welches idealerweise in einer Fertigformulierung bereitgestellt wird. Die Fertigformulierung bzw. ein 2-Komponenten-Pack ist dahingehend formuliert, dass die an sich inkompatiblen Komponenten Kupfer und Chitosan mittels Zusatz von und/oder Reaktion mit zusätzlichen Co-Formulantien stabilisiert werden.

Als bedeutendes Fungizid und/oder Bakterizid wird Kupfer im Pflanzenschutz überwiegend in Form von schwer löslichen Salzen eingesetzt. Besonderer Schwerpunkt bildet dabei der Einsatz von Kupfersalzen auf Basis von Kupferoxychlorid, Kupferhydroxid, Kupferoxydul, basischem Kupfercarbonat oder Bordeaux Brühe. Aus ökonomischer Betrachtungsweise ist der gleichzeitige Einsatz von mehreren Pflanzenschutzmitteln mit einer einzigen Applikation besonders wünschenswert. Bei einem Einsatz der genannten Kupfersalze ist eine Kombination mit anderen Pflanzenschutzmitteln jedoch oft mit Problemen verbunden, da hier je nach Mischpartner Interaktionen auftreten können, die das entsprechende Kupfersalz beeinflussen.

Dies gilt insbesondere für die Kombination aus einer kupferhaltigen Formulierung mit Chitosan entsprechend der hier gegebenen Definition.

Gelöste oder lösliche Chitosanverbindungen, welche üblicherweise unter einem Zusatz von Säure in Lösung überführt werden, neigen unter Erhöhung des pH-Wertes oder unter Zugabe bestimmter Salze zu einer Gelierung bzw. Ausfällung. Dies kann bei einer Applikation im Pflanzenschutz insbesonder in Tankmischungen zu anwendungstechnischen Problemen wie z.B. einer Blockierung der Düsen der Applikationsgeräte führen. Weiterhin können hierdurch Wirkungsverluste der eingesetzten Mittel auftreten.

Insbesondere die Kombination von Chitosanen mit wasserunlöslichen Kupfersalzen in einer unzureichenden Formulierung führt bei der Applikation bzw. Anwendung als Fungizid und/oder Bakterizid und der damit benötigten Verdünnung in Wasser oder bereits in wässrigen Formulierungen zu einer Gelierung und/oder Ausfällung, wenn nicht besondere Vorkehrungen durch Formulierhilfsstoffe und/oder die Herstellungsweise getroffen werden.

Die hier beschriebene Formulierung wird in einer solchen Art und Weise hergestellt, dass eine unkontrollierte Gelierung bzw. Ausfällung des Chitosans vermieden wird und eine Kombination mit einem Kupfersalz ermöglicht wird. Zusätzlich wird vermieden, dass das in Wasser unlösliche Kupfersalz durch Zusatz von Säure gelöst wird und dadurch, die für eine optimierte Wirkung begünstigte Form eines in Wasser unlöslichen Salzes beibehält. Hierfür ist eine genaue Einstellung des eingesetzten Kupfers, des Chitosans und der Hilfsstoffe erforderlich. Im Detail wird dieses Problem durch eine mindestens zweistufige Umsetzung gelöst. In einem ersten Schritt wird das Chitosan durch einen Zusatz von Anionen, bevorzugt Phosphat oder Sulfat, zur Ausfällung gebracht. In diesem Fall wird im weiteren auch der Begriff "vernetztes Chitosan" verwendet und die eingesetzten Salze und deren Anionen werden als "Vernetzungsmittel" bezeichnet. Das ausgefällte Chitosan bzw. die Suspension wird dabei durch den Zusatz einer Base bevorzugt Natriumhydroxid oder Kaliumhydroxid auf einen pH-Wert größer 5 eingestellt. In einem zweiten Schritt wird das unlösliche Kupfersalz direkt in der Formulierung oder als ein 2-Komponenten Gemisch bevorzugt im Spritztank zugefügt.

Es hat sich herausgestellt, das das ausgefällte Chitosan in einer Formulierung mit Kupfersalzen stabilisiert ist und eine anwendungstypische Applikation mit dieser Formulierung durchgeführt werden kann. Zusätzlich hat sich herausgestellt, dass durch den Einsatz eines derart vorbehandelten Chitosans eine positive Wirkung in der Formulierung bzw. in der darauf folgenden Anwendung erzielt wird.

Obwohl es nicht ausgeschlossen ist, dass das erfindungsgemäße Fungizid und/oder Bakterizid außer Chitosan und dem mindestens einen Kupfersalz noch einen oder mehrere andere fungizid und/oder bakterizid wirkende Stoffe enthält, ist eine Kombination nur aus Chitosan und dem mindestens einen Kupfersalz als fungizider und/oder bakterizider Wirkstoff bevorzugt.

In einer bevorzugten Ausführungsform des erfindungsgemäßen Fungizids und/oder Bakerizids beträgt das *Gewichtsverhältnis* von Chitosan zu Kupfer 2:1-20, bevorzugt 1:4-10, wobei das Kupfer in Form von mindestens einem Kupfersalz vorliegt. Beispiele für geeignete Gewichtsverhältnisse sind 1:1, 1:2, 1:4, 1:6, 1:8 oder 1:10. Es kommen aber auch gebrochene Verhältnisse in Frage, z.B. 1:2,5, 1:4,2, oder 1:6,3. Die Formulierung "zu dem Kupfer, wobei das Kupfer in Form von mindestens einem Kupfersalz vorliegt" bedeutet, dass das Verhältnis nur auf das Gewicht des Elements Kupfer ("Reinkupfer") in dem Salzmolekül bezogen ist. Mit Bezug auf die obigen Gewichtsverhältnisse wird hier gegebenenfalls auch der Ausdruck "CS-Cu-Verhältnis" verwendet.

Vorzugsweise beträgt der zahlenmittlere Polymerisierungsgrad DPn des Chitosans in dem erfindungsgemäßen Fungizid und/oder Bakterizids 30-1000, bevorzugt 30-700, weiter bevorzugt 30-500, besonders bevorzugt 30-300. Dabei beträgt der *Acetylierungsgrad* DA bevorzugt 10-30%, weiter bevorzugt 15-25%, weiter bevorzugt 18-22% und besonders bevorzugt etwa 20%. Es versteht sich für den Fachmann von selbst, dass es sich hier um durchschnittliche Werte handelt, und dass der tatsächliche Wert innerhalb der Fehlergrenzen der jeweiligen Messmethode liegt, also gegebenenfalls auch außerhalb der angegebenen Werte liegen kann.

Weiterhin wird in einer bevorzugten Variante des erfindungsgemäßen Fungizids und/oder Bakterizids das Gewichtsverhältnis von Tripolyphosphat oder Natriumsulfat als besonders bevorzugte Vernetzungsmittel zu Chitosan von 1 zu 1-5 und besonders bevorzugt von 1 zu 3 verwendet.

Bei dem mindestens einen Kupfersalz handelt es sich um ein in Wasser schwer lösliches anorganisches Kupfersalz. Beispiele für geeignete Kupfersalze sind basisches Kupfercarbonat (CuCO₃•Cu(OH)₂, 2 CuCO₃•Cu(OH)₂, abgekürzt CO3), Kupferhydroxid (Cu(OH)₂, abgekürzt COH), Kupferoxychlorid (CuCl₂ * 3 Cu(OH)₂, abgekürzt COC) oder Kupfer(I)oxid (Cu₂O, abgekürzt COX). Auch ein als Bordeaux Brühe bekanntes Umsetzungsprodukt aus Kupfersulfat und Calciumhydroxid der Formel Cu₄(OH)₆SO₄x3 CaSO₄xnH₂O ist geeignet. Besonders bevorzugt ist COH. Bevorzugt ist in dem erfindungsgemäßen Mittel nur ein Kupfersalz enthalten. Es können jedoch auch mehrere Kupfersalze enthalten sein, beispielsweise eine Mischung aus zwei oder drei der oben genannten Verbindungen, wobei die Mengenverhältnisse der Kupfersalze untereinander, bezogen auf das Kupfer, gleich oder verschieden sein können.

Insbesondere ist auch daran gedacht, dass die verwendeten Einzelkomponenten in einer komplexen Formulierung derart kombiniert werden, dass eine optimierte Wirkung und Anwendung ermöglicht wird. Aufgrund der Einzigartigkeit der Formulierung werden negative Interaktionen der Einzelkomponenten (hinsichtlich der Anwendbarkeit und Wirkung) verhindert. Im Detail wird dies dadurch erzielt, dass zusätzlich zu den genannten Einzelkomponenten eine genaue Abstimmung der eingesetzten Hilfsstoffe vorgenommen wird.

Es hat sich überraschend herausgestellt, dass die erfindungsgemäße Komposition aus Chitosan und mindestens einem Kupfersalz erzeugt werden kann, die zugleich einen guten Schutz für

Pflanzen, insbesondere Getreidepflanzen, Wein, Kernobst, Olive, Zitrus, Kaffee, Kakao, Gemüse und Nachtschattengewächse, vor Pilz- und/oder Bakterienbefall bietet. Darüber hinaus bietet sie ebenfalls Schutz vor Pilz-und/oder Bakterienbefall in allen anderen Kulturen gemäß Anlage 1.

Die Komposition aus Chitosan und mindestens einem Kupfersalz zeigt eine sich ergänzende protektive Wirkung und kann protektiv eingesetzt werden, um ein breites Spektrum von pilzbedingten und/oder bakteriellen Pflanzenkrankheiten zu bekämpfen.

Ebenfalls ist daran gedacht, eine Applikation des spritzbaren Fertigproduktes bzw. Pack-Kombination auf eine Kulturpflanze auf einer Kulturfläche vorzunehmen.

Bei einer derartigen Anwendung betrifft die vorliegende Erfindung auch die Anwendung der Komposition aus Kupfer und Chitosan auf einer Kulturpflanze, insbesondere Getreidepflanze, Kernobst, Nachtschattengewächse, Olive, Zitrus, Kaffee, Kakao, Gemüse und Wein, wobei die Kulturpflanze auf einer Kulturfläche angebaut wird.

Die Kulturpflanze kann eine Getreidepflanze sein, die ausgewählt ist aus den Gattungen Triticum, Secale, Hordeum, Oryza, Zea, Avena, Sorghum, Panicum, Pennisetum, Setaria, Eleusine und Eragrostis. Beispielsweise kann es sich bei der Getreidepflanze um Winter- oder Sommerweizen, Winter- oder Sommergerste, Winter- oder Sommerroggen, Winter- oder Sommertriticale, Winter- oder Sommerhafer, Hartweizen, Dinkel oder Emmer handeln. Es kann sich aber auch um eine andere Kulturpflanze, beispielsweise eine Pflanze der Gattung Vitis, z.B. Vitis vinifera, handeln, oder eine der Gattung Nachtschatten, z.B. Solanum tuberosum oder Solanum lycopersicum bzw. Untertribus Kernobst, z.B. Malus oder Pyrus. Der Aspekt deckt darüber hinaus auch Kulturpflanzen ab, die in Anlage 1 gelistet sind.

Die Applikation des erfindungsgemäßen Fungizids und/oder Bakterizids kann wie im Stand der Technik allgemein bekannt erfolgen, und beispielsweise das Spritzen einer ausreichenden Menge Fungizids und/oder Bakterizids zu einem geeigneten Zeitpunkt vor oder nach der Aussaat der Kulturpflanze, z.B. des Getreides und Nachtschattengewächses, oder, beispielsweise im Falle von Weinreben und Kernobst, vor oder während der Fruchtbildung umfassen. Das erfindungsgemäße Fungizid und/oder Bakterizid kann dabei einmalig oder gegebenenfalls auch zwei oder mehrmals hintereinander appliziert werden. Die Applikation kann beispielsweise durch ein- oder mehrmaliges Spritzen einer SC-Formulierung der erfindungsgemäßen Kombination in einer dem Bestand angepassten Wassermenge erfolgen.

In einem weiteren Aspekt betrifft die Erfindung auch die Verwendung eines Chitosan und mindestens ein Kupfersalz umfassenden Fungizids und/oder Bakterizids zur Verhinderung oder Verminderung des Pilzbefalls und/oder Bakterienbefalls von Kulturpflanzen.

Das erfindungsgemäße Fungizid ist besonders gut geeignet für den Schutz von Getreidepflanzen vor pilzbedingten Erkrankungen wie beispielsweise Blattseptoria (Septoria tritici), In Kernobst gegen Schorf (Venturia spp), in Wein gegen falschen Mehltau (Plasmopara viticola), in Olive gegen Pfauenaugenkrankheit (Cycloconium oleaginum), in Zitrus gegen Braunfäule (Phytophthora spp.), in Kaffee gegen Rost (Hemileia vastatrix), in Kakao gegen Schwarzfäule (Phytophthora palmivora), in Gemüse gegen falschen Mehltau (Oomycetes) und echten Mehltau (Erysiphe spp.) und in Nachtschattengewächsen gegen falschen Mehltau (Phytophthora infestans). Darüber hinaus kann es auch zum Schutz anderer Nutzpflanzen eingesetzt werden gegen eine Vielzahl von pilzlichen Krankheiten gemäß Anlage 1. Weiterhin ist das erfindungsgemäße Bakterizid besonders geeignet für den Schutz vor bakteriellen Erkrankungen, welche durch die bakteriellen Erreger der Dickeya spp., Erwinia spp., Xanthomonas spp. und Pseudomonas spp.hervorgerufen werden, einschliesslich der Krankheiten, die in Anlage 1 als bakterielle Krankheiten explizit erwähnt werden.

In einem weiteren Aspekt wird die Aufgabe gelöst, indem durch die Ausbringung der Kombination mit reduzierten Kupfermengen eine gleichbleibende Befallsminderung erzielt wird wie mit herkömmlichen Kupferfungiziden und/oder -Bakteriziden, die in höheren Aufwandmengen ausgebracht werden müssen.

Bei einer derartigen Anwendung betrifft die Erfindung auch die Verwendung eines Chitosan und mindestens ein Kupfersalz umfassenden Fungizids und/oder Bakterizids zur Reduzierung des umweltrelevanten Wirkstoffes Kupfer bei gleichbleibender Befallsminderung/Befallskontrolle des Schadpathogens und somit bei gleichbleibendem Schutz der Kulturpflanze. Alternativ kann bei gleichbleibender Kupfereinsatzmenge die Wirksamkeit erhöht werden.

### 4. Beispiele für das erfindungsgemäße Patent:

Bei dem erfindungsgemäßen Fungizid und/oder Bakterizid können das Chitosan und das mindestens eine Kupfersalz beispielsweise in einem Suspensionskonzentrat, benetzbarem Pulver, Öldispersion, Suspoemulsion oder wasserdispergierbaren Granulat vorliegen. Die Formulierung enthält neben dem Chitosan und dem Kupfersalz auch noch ein oder mehrere Hilfsstoffe wie Benetzungsmittel, Vernetzungsmittel, Neutralisierungsmittel, Dispergiermittel, Emulgator, Frostschutzmittel, Entschäumer, Füllstoffe, Haftmittel, Verdickungsmittel, Stabilisatoren und dergleichen. Solche Mittel sind dem Fachmann bekannt und werden je nach Zusammensetzung und Einsatzzweck der Formulierung entsprechend gewählt. Beispiele für relevante Hilfsstoffe sind Natriumtripolyphosphat (NaTPP), Natriumsulfat (NaSO₄), Natriumhydroxid (NaOH), Naphtalinsulfonsäure-Formaldehyd Kondensate, Copolymere auf Basis von Acrylsäure, C12-C15-Fettalkoholalkoxylate, Ligninsulfonate, ethoxylierte Tristyrylphenol Polymere, Siliconölentschäumer, ethoxylierte Sorbitanester Polymere, Propylenglykol.

Ein allgemeines Beispiel für ein erfindungsgemäßes Suspensionskonzentrat umfasst 2-5 % Chitosan, 10-25 % Kupferhydroxid, 2-8 % Dispergator, 1-8 % Netzmittel, 1-3 Vernetzungsmittel, 40-80 % Wasser und bevorzugt weitere Hilfsstoffe, wobei das Chitosan zu Kupfer Verhältnis in den entsprechenden Paarungen 2:1 nicht überschreitet. Insbesondere die Kombination des Vernetzungsmittels Tripolyphosphat (TPP) oder Natriumsulfat zu Chitosan im Verhältnis 1 zu 1-5, bevorzugt 1 zu 3, ist hierbei zu verwenden.

Ein detailiertes Beispiel für ein erfindungsgemäßes Suspensionskonzentrat umfasst ca. 3 % Chitosan, ca. 25 % Kupferhydroxid, ca. 1 % Tripolyphosphat, ca. 3 % Naphtalinsulfonat, ca. 6 % C15-Fettalkoholalkoxylate, ca. 2 % HCl und NaOH Lösungen zur pH Regulierung, ca 60 %, Wasser und bevorzugt weitere Hilfsstoffe.

Ein weiteres detailiertes Beispiel für ein erfingungsgemäßes Suspensionskonzentrat umfasst ca. 3 % Chitosan, ca. 25 % Kupferhydroxid, ca. 1 % Natriumsulfat, ca. 5 % Ligninsulfonat, ca. 6 % Polyethoxysorbitanlaureat, ca. 2 % HCl und NaOH Lösungen zur pH Regulierung, ca 60 %, Wasser und bevorzugt weitere Hilfsstoffe.

Ein allgemeines Beispiel für ein erfindungsgemäßes Granulat umfasst beispielsweise 5-15 % vernetztes Chitosan, 30-65 % Kupferhydroxid, 4-10 % Ligninsulfonat, und bevorzugt weitere Hilfsstoffe.

Ein allgemeines Beispiel für eine erfindungsgemäße Dispersion in Öl umfasst beispielsweise 5-10 % vernetztes Chitosan, 20-40 % Kupferhydroxid, 40-65 % natürliches oder synthethisches Öl bevorzugt Sonnenblumenöl, 5-8 % Emulgatoren, 4-6% Dispergatoren und bevorzugt weitere Hilfsstoffe.

Der Massenanteil (w/w) der Kombination aus Chitosan und Kupfersalz(en) in einem erfindungsgemäßen Fungizid und/oder Bakterizid, beispielsweise formuliert als Suspensionskonzentrat (SC), kann, bezogen auf die Gesamtmasse des Gemisches, beispielsweise des Suspensionskonzentrats, insgesamt beispielsweise *mindestens 5%* betragen. Im Falle des Kupfersalzes oder der Kupfersalze ist, wenn nicht anders genannt, lediglich der Kupfergehalt und nicht der Salzgehalt in den Massenanteil einbezogen. Der Massenanteil der fungiziden und/oder bakteriziden Wirkstoffkombination ist jedoch bevorzugt insgesamt höher und kann beispielsweise mindestens 10%, mindestens 15%, mindestens 20 %, mindestens 25 % oder mindestens 30 % betragen.

Die Erfindung umfasst insbesondere auch die Verwendung einer Chitosan und mindestens ein Kupfersalz umfassenden Zusammensetzung zum Schutz von Kulturpflanzen, wobei die Wirksamkeit bei gleichbleibender Kupfermenge erhöht bzw. bei reduzierter Kupfermenge erhalten bleibt.

Die Erfindung wird im Folgenden anhand von Anwendungsbeispielen rein zu Veranschaulichungszwecken näher erläutert.

### Abkürz ungen:

| | | |
|---|---|---|
| Kultur/E rreger | VITVI/PLASVI | Wein / Falscher Mehltau an Wein |
| | MABSD/VENTIN | Apfel / Apfelschorf |
| | SOLTU/PHYTIN | Kartoffel / Kraut- und Knollenfäule |
| System | G | Gewächshaus |
| | F | Freiland |
| gai/Unit | VITVI/PLASVI (G) | gai Kupfer / 100 Liter Wasser |
| | MABSD/VENTIN | gai Kupfer / ha / mKh |
| | SOLTU/PHYTIN | gai Kupfer / ha |
| | VITVI/PLASVI (F) | gai Kupfer / ha |
| Befall | VITVI/PLASVI (G) | % Befallsstärke (PESSEV%) Blatt |
| | MABSD/VENTIN | % Befallshäufigkeit (PESINC%) |
| | SOLTU/PHYTIN | Integral Befallskurve (AUDPC = Area under disease progression curve) |
| | VITVI/PLASVI (F) Fertigprodukte A-J | % Befallsstärke (PESSEV%) Trauben |
| Produkt e | | Kupfer-Chitosan-Kompositionen als Fertigformulierung mit unerschiedlichen Rezepturen, CS/Cu-Verhältnissen, oder DPs |

| **Versuch snr** | **Kultur/Err eger** | **Syst em** | **Versuchsmittel** | **Cu/ Cs** | **Vernetzung smittel** | **D Pn** | **gai/ Unit** | **Bef all** |
|---|---|---|---|---|---|---|---|---|
| G15PLV 29/30 | VITVI/PLA SVI | G | UTC | | | -- | 0 | 90 |
| | | | Kupferprodukt (Stand der Technik) | | | -- | 40 | 24. 9 |
| | | | Fertigprodukt A aus Kupfer und Chitosan | 4:1 | TPP | 50 | 40 | 11 |
| | | | Fertigprodukt B aus Kupfer und Chitosan | 4:1 | TPP | 26 4 | 40 | 11. 43 |
| | | | | | | | | |
| | | | Kupferprodukt (Stand der Technik) | | | -- | 25 | 30. 4 |
| | | | Fertigprodukt A aus Kupfer und Chitosan | 4:1 | TPP | 50 | 25 | 24. 76 |
| | | | Fertigprodukt B aus Kupfer und Chitosan | 4:1 | TPP | 26 4 | 25 | 23. 9 |
| G15PLV 37 | VITVI/PLA SVI | G | UTC | | | | | 90 |
| | | | Kupferprodukt (Stand der Technik) | | | | 40 | 20. 7 |
| | | | Kupferprodukt (Stand der Technik) | | | | 20 | 26. 8 |
| | | | Fertigprodukt A aus Kupfer und Chitosan | 4:1 | TPP | 50 | 20 | 11. 4 |
| | | | Fertigprodukt C aus Kupfer und Chitosan | 6:1 | TPP | 50 | 20 | 12. 3 |
| | | | Fertigprodukt D aus Kupfer und Chitosan | 8:1 | TPP | 50 | 20 | 28. 2 |
| F15HIU3 4 | MABSD/V ENTIN | F | UTC | | | | 0 | 50 |
| | | | Kupferprodukt (Stand der Technik) | | | -- | 100 | 8 |
| | | | Fertigprodukt E aus Kupfer und Chitosan | 4:1 | TPP | 50 | 97 | 7 |
| | | | | | | | | |
| | | | Kupferprodukt (Stand der Technik) | | | -- | 75 | 17 |
| | | | Fertigprodukt E aus Kupfer und Chitosan | 4:1 | TPP | 50 | 77 | 6 |
| | | | Fertigprodukt F aus Kupfer und Chitosan | 4:1 | NaSO4 | 50 | 77 | 6 |
| F15JOU 35 | MABSD/V ENTIN | F | UTC | | | | 0 | 46 |
| | | | Kupferprodukt (Stand der Technik) | | | -- | 100 | 7 |
| | | | Fertigprodukt E aus Kupfer und Chitosan | 4:1 | TPP | 50 | 97 | 8 |
| | | | | | | | | |
| | | | Kupferprodukt (Stand der Technik) | | | -- | 75 | 13 |
| | | | Fertigprodukt E aus Kupfer und Chitosan | 4:1 | TPP | 50 | 77 | 9 |
| | | | | | | | | |
| | | | Kupferprodukt (Stand der Technik) | | | -- | 50 | 15 |
| | | | Fertigprodukt E aus Kupfer und Chitosan | 4:1 | TPP | 50 | 48 | 9 |
| F15CVK 58 | SOLTU/P HYTIN | F | UTC | | | | 0 | 237 |
| | | | Kupferprodukt (Stand der Technik) | | | -- | 500 | 175 |
| | | | Kupferprodukt (Stand der Technik) | | | -- | 300 | 248 |
| | | | Fertigprodukt G aus Kupfer und Chitosan | 4:1 | TPP | 50 | 300 | 126 |
| | | | Fertigprodukt H aus Kupfer und Chitosan | 4:1 | TPP | 50 | 300 | 133 |
| | | | Fertigprodukt J aus Kupfer und Chitosan | 4:1 | TPP | 50 | 300 | 125 |
| 2015023 | VITVI/PLA SVI | F | Kupferprodukt (Stand der Technik) | | | | 400 | 3.1 |
| | | | Fertigprodukt E aus Kupfer und Chitosan | 4:1 | TPP | 50 | 405 | 1.8 |
| | | | Fertigprodukt H aus Kupfer und Chitosan | 4:1 | TPP | 50 | 400 | 2.8 |
| | | | | | | | | |
| | | | Kupferprodukt (Stand der Technik) | | | | 300 | 6.7 |
| | | | Fertigprodukt E aus Kupfer und Chitosan | 4:1 | TPP | 50 | 290 | 3.6 |
| | | | Fertigprodukt H aus Kupfer und Chitosan | 4:1 | TPP | 50 | 303 | 6.2 |
| | | | Fertigprodukt J aus Kupfer und Chitosan | 4:1 | TPP | 50 | 288 | 3.5 |
| | | | | | | | | |
| | | | herkömmliches Kupferprodukt | | | | 200 | 10. 3 |
| | | | Fertigprodukt E aus Kupfer und Chitosan | 4:1 | TPP | 50 | 193 | 12. 3 |
| | | | Fertigprodukt H aus Kupfer und Chitosan | 4:1 | TPP | 50 | 196 | 5.1 |

Anlage 1: Übersicht der mit dem fungiziden Pflanzenschutzmittel zu kontrollierende Pathogene in den jeweiligen Kulturen:

| Kultur | Krankheit bzw Pathogen |
|---|---|
| Mandel | Clasterosporium carpophilum |
| | Puccinia pruni-spinosae |
| | Sclerotinia laxa and Sclerotinia fructigena |
| | Taphrina deformans |
| Aloe | Colletotrichum agaves |
| Löwenmaul | Puccinia antirrhini |
| Apfel | Corticium salmonicolor |
| | Erwinia amylovora |
| | Glomerella cingulata |
| | Nectria galligena |
| | Phyllosticta solitaria |
| | Physalospora obtusa |
| | Sclerotinia laxa |
| | Venturia inaequalis |
| Aprikose | Clasterosporium carpophilum |
| | Puccinia pruni-spinosae |
| | Sclerotinia laxa and Sclerotinia fructigena |
| Areka-Nuss | Corticium koleroga |
| Marantengewächse (Pfeilwurz) | Corticium solani |
| Artischoke | Ramularia cynarae |
| Spargel | Puccinia asparagi |
| Avocado | Cercospora purpurea |
| | Glomerella cingulata |
| | Pseudomonas syringae |
| | Sphaceloma perseae |
| Azaleen | Ovulinia azaleae |
| Banane | Botryodiplodia theobromae |
| | Helminthosporium sp. |
| | Mycosphaerella musicola |
| Gerste | Typhula itoana |
| | Ustilago hordei |
| Dicke Bohnen | Asochyta pisi |
| | Botrytis cinerea |
| | Uromyces fabae |
| Bohnen | Colletotrichum lindemuthianum |
| | Erysiphe polygoni |
| | Pseudomonas medicaginis var phaseolicola |
| | Uromyces appendiculatus |
| | Xanthomonas phaseoli |
| Begonien | Oidium begoniae |
| Betelnuss | Bacterium betle |
| | Glomeralla cingulata |
| | Phytophthora colocasiae |
| | Phytophthora parasitica |
| Brombeere | Elsinoe veneta |
| Heidelbeere und Blaubeere | Microsphaera alni var. vaccinii |
| | Pucciniastrum myrtilli |
| | Sclerotinia vaccinii-corymbosi |
| Kohlarten | Oipidium brassicae |
| | Peronospora parasitica |
| | Phoma lingam |
| | Xanthomonas campestris |
| Kakao | Botryodiplodia theobromae |
| | Marasmius perniciosus |
| | Phytophthora palmivora |
| Ringelblume | Cercospora calendulae |
| Nelken | Didymellina dianthi |
| | Septoria dianthi |
| | Uromyces dianthi |
| Möhren | Alternaria dauci |
| | Bacterium carotovorum |
| | Cercospora carotae |
| Cassava | Cercospora henningsii |
| Rhizinus | Phyllosticta bosensis |
| Cattleya | Phythium ultimum |
| Sellerie | Cercospora apii |
| | Septoria apii and Septoria apii graveolentis |
| Kirsche | Clasterosporium carpophilum |
| | Coccomyces hiemalis |
| | Glomerella cingulata |
| | Gnomonia erythrostoma |
| | Pseudomonas mors-prunorum |
| | Sclerotinia laxa and Sclerotinia fructigena |
| | Venturia cerasi |
| Esskastanie / Marone | Endothia parasitica |
| | Phytophthora cambivora |
| Chili-Pfeffer | Cercospora capsici |
| | Phytophthora capsici |
| | Xanthomonas vesicatoria |
| Chrysanthemen | Oidium chrysanthemi |
| | Puccinia chrysanthemi |
| | Septoria chrysanthemella |
| Chinarindenbaum | Pythium vexans |
| Zinerararie | Alternaria senecionis |
| Zitronengras | |
| Zitrusfrüchte | Aithaloderma citri |
| | Corticium koleroga |
| | Diaporthe citri |
| | Deuterophoma tracheiphila |
| | Elsinoe fawcetti |
| | Gloeosporium limetticola |
| | Leptothyrium pomi |
| | Phoma citricarpa |
| | Phytophthora spp. |
| | Pseudomonas syringae |
| | Septoria depressa |
| | Xanthomonas citri |
| Kaffee | Cercospora coffeicola |
| | Corticium koleroga |
| | Glomerella cingulata |
| | Hemileia vastatrix |
| | Colletotrichum coffeanum |
| Koniferen | Cercospora thujina |
| | Coryneum berckmanii |
| | Coryneum cardinale |
| | Cronartium fusiforme |
| | Cronartium ribicola |
| | Hendersonula agathi |
| | Lophodermium pinastri |
| | Phomopsis juniperovora |
| | Rhabdocline pseudotsugae |
| | Rhizoctonia crocorum |
| Baumwolle | Alternaria gossypii and Alternaria |
| | |
| | Corticium solani |
| Kuhbohne | Cladosporium vignae |
| Kürbisgewächse | Alternaria cucumerina |
| | Choanephora cucurbitarum |
| | Colletotrichum lagenarium |
| | Erwinia tracheiphila |
| | Erysiphe cichoracearum |
| | Mycosphaerella citrullina |
| | Physalospora rhodina |
| | Pseudoperonospora cubensis |
| Korinthe | Mycosphaerella grossulariae and Mycosphaerella ribis |
| | Pseudopeziza ribis |
| Besenginster | Ceratophorum setosum |
| Osterglocke | Ramularia vallisumbrosae |
| | Sclerotinia polyblastis |
| Dahlien | Phyllosticta dahliicola and Entyloma dahliae |
| Rittersporn | Erysiphe polygoni |
| Hartriegel | Elsinoe corni |
| Aubergine | Ascochyta melongenae |
| | Corticium solani |
| Feige | Cercospora bolleana |
| | Cerotelium fici |
| | Corticium koleroga |
| | Phomopsis cinerescens |
| | Phizoctonia microsclerotia |
| Haselnuss | Xanthomonas corylina |
| Obstbäume | Bacterium tumefaciens |
| Gambir | Fomes lignosus |
| Gardenie | Phomopsis gardenia |
| Gerbera | Cercospora sp. |
| Ginseng | Alternaria panax |
| Gladiole | Botrytis gladiolorum |
| Stachelbeere | Botrytis cinerea |
| | Mycosphaerella grossulariae |
| | Puccinia pringshemiana |
| | Sphaerotheca mors-uvae |
| Gräser | Calonectria graminicola |
| | Corticium fusiforme |
| | Rhizoctonia and Holminthosporium spp. |
| | Ustilago striiformis |
| Erdnuss | Cercospora arachidicola and Cercospora personate |
| | Sclerotium rolfsii |
| Guava | Cephaleuros mycoidea |
| | Corticium koleroga |
| | Puccinia psidii |
| Nieswurz | Coniothyrium hellebori |
| Stockrose | Puccinia malvacearum |
| Hopfen | Pseudoperonospora humuli |
| | Sphaerotheca humuli |
| Hortensie | Oidium hortensiae |
| Lauch | Peronospora destructor |
| | Phytophthora porri |
| Salat | Bremia lactucae |
| | Marssonina panattoniana |
| Lilie | Botrytis elliptica |
| Mais | Sclerospora philippinensis |
| Mango | Cephaleuros virescens |
| | Colletotrichum gloeosporioides |
| | Elsinoe mangiferae |
| | Erwinia mangiferae |
| | Gloeosporium mangiferae |
| | Oidium mangiferae |
| Mispel | Venturia eriobotryae |
| Hirse | Ustilago crameri |
| Pilze | Mycogone perniciosa |
| | Pseudomonas tolaasi |
| Nektarine | Clasterosporium carpophilum |
| | Puccinia pruni-spinosae |
| | Sclerotinia laxa and Sclerotinia fructigena |
| | Taphrina deformans |
| Hafer | Ustilago avanae |
| Olive | Cycloconium oleaginum |
| Zwiebel | Peronospora destructor |
| Orchideen | Macrophoma and Diplodia spp. |
| Pfingstrose | Botrytis peaoniae |
| | Sphaeropsis paeonia |
| Ölpalme | Pestalotia palmarum |
| Passionsfrucht | Alternaria passiflorae |
| | Pseudomonas passiflorae |
| Papaya | Ascochyta caricae |
| | Colletotrichum gloeosporioides |
| | Oidium caricae |
| | Phytophthora parasitica |
| Pfirsich | Clasterosporium carpophilum |
| | Puccinia pruni-spinosae |
| | Sclerotinia laxa and Sclerotinia fructigena |
| | Taphrina deformans |
| Birne | Cladosporium effusum |
| | Corticium koleroga |
| | Erwinia amylovora |
| | Glomerella cingulata |
| | Mycosphaerella sentina |
| | Venturia pirina |
| Pecanuss | Cladosporium effusum |
| | Corticium koleroga |
| | Gnomonia nerviseda |
| | Gnomonia caryae var. pecanae |
| roter Pfeffer | |
| virginische Dattelpflaume | Phomopsis diospyri |
| Ananas | Phytophthora parasitica |
| Plantane | Helminthosporium torulosum |
| Zwetschge & Pflaume | Clasterosporium carpophilum |
| | Dibotryon morbosum |
| | Pseudomonas mors-prunorum |
| | Pseudomonas prunicola |
| | Puccinia pruni-spinosae |
| | Sclerotinia fructigena |
| | Sclerotinia laxa |
| | Taphrina pruni |
| | Xanthomonas pruni |
| Pappel | Septogloeum populiperdun |
| Mohn | Peronospora arborescens |
| Kartoffel | Alternaria solani |
| | Botrytis cinerea |
| | Phytophthora infestans |
| | Sclerotium rolfsii |
| Quitte | Sclerotinia fructigena |
| | Clasterosporium carpophilum |
| Himbeere | Didymella applanata |
| | Elsinoe veneta |
| | Leptosphaeria coniothyrium |
| Rhododendron | Pycnostysanus azaleae |
| Rhabarber | Peronospora jaapiana |
| Reis | Ophiobolus miyabeanus |
| | |
| | Piricularia oryzae |
| Rosen | Diplocarpon rosae |
| | Peronospora sparsa |
| | Phragmidium mucronatum |
| | Sphaceloma rosarum |
| | Sphaerotheca pannosa |
| Kautschukbäume | Dothidella ulei |
| | Fomes lignosus |
| | Helminthosporium heveae |
| | Pestalotia palmarum |
| | Phytophthora palmivora |
| Weidelgrass | Phialea temulenta |
| Safran | Puccinia carthami |
| Keimlinge | Pythium debaryanum, Pythium and Rhizoctonia spp, Sclerotinia sclerotiorum,etc |
| Sorghum | Sphacelotheca sorghi |
| Spinat | Heterosporium variabile |
| | Peronospora effusa |
| Pfaffenhütchen | Oidium euonymi-japonicae |
| Erdbeere | Mycosphaerella fragariae |
| Zuckerrübe | Cercospora beticola |
| | Peronospora schactii |
| Sonnenblumen | Puccinia helianthi |
| | Sclerotinia sclerotiorum |
| Süßkartoffel | Fusarium spp. |
| Taro | Phytophthora colocasiae |
| Tee | Botryodiplodia theobromae |
| | Cephaleuros niycoidea |
| | Exobasidium vexans |
| | Pestalotia theae |
| Tabak | Alternaria longipes |
| | Ascochyta nicotianae |
| | Cercospora nicotianae |
| | Peronospora tabacina |
| | Pseudomonas tabacum |
| Tomate | Alternaria solani |
| | Cladosporium fulvum |
| | Colletotrichum phomoides |
| | Didymella lycopersici |
| | Leveilluia taurica |
| | Phytophthora capsici |
| | Phytophthora cryptogea |
| | Phytophthora infestans |
| | Septoria lycopersici |
| | Stemphylium solani |
| | Xanthomonas vesicatoria |
| Tuberose | Botrytis elliptica |
| Holzölbaum | Corticium koleroga |
| Ehrenpreis | Septoria exotici |
| Wein | Coniothyrium diplodiella |
| | Elsinoe ampelina |
| | Guignardia bidwellii |
| | Isariopsis fuckelli |
| | Melanconium fuligineum |
| | Mycosphaerella angulata |
| | Plasmopara viticola |
| | Pseudopeziza tracheiphila |
| | Uncinula necator |
| | Exosporium sultanae |
| Stiefmütterchen | Centrospora acerina |
| Veilchen | Sphaceloma violae |
| Walnuss | Ascochyta juglandis |
| | Gnomonia leptostyla |
| | Microstroma juglandis |
| | Xanthomonas juglandis |
| Weizen | Gibberella zeae |
| | Puccinia spp. |
| | Pythium sp. |
| | Tilletia caries and Tilletia faetida |
| Weide | Physalospora miyabeana |
| | Venturia chlorospora |
| Zinnia | Sclerotinia sclerotiorum |

## Patentansprüche

1. Fungizid und/oder Bakterizid, umfassend Chitosan und mindestens ein Kupfersalz, wobei das Chitosan in einem zahlenmittleren Polymerisierungsgrad DPn von 30-1000 vorliegt, **dadurch gekennzeichnet, dass** das Kupfersalz anorganisch und in Wasser unlöslich ist, dass das Chitosan ausgefällt ist und dass das Chitosan durch Zusatz von anionischen Formulierungshilfsstoffen auf der Basis von Sulfat oder Phosphat, wie Natriumsulfat, Kaliumsulfat, Trinatriumphosphat, Tetranatriumdiphosphat, Pentanatriumphosphat unter Ausbildung von dispergierbaren Partikeln stabilisiert ist.

2. Fungizid und/oder Bakterizid, nach Anspruch 1, wobei der Acetylierungsgrad DA 10-30%, bevorzugt 15-25%, weiter bevorzugt 18-22% und besonders bevorzugt 20% beträgt.

3. Fungizid und/oder Bakterizid, nach Anspruch 1 oder 2, wobei es sich bei dem mindestens einen anorganischen und in Wasser unlöslichen Kupfersalz um Kupferhydroxid (Cu(OH)₂, basisches Kupfercarbonat (xCuCO₃ * Cu(OH)₂), Kupferoxychlorid (CuCl₂ * 3Cu(OH)₂), Kupfer(I)oxid (Cu₂O) oder Bordeaux Brühe handelt, besonders bevorzugt ist Kupferhydroxid.

4. Fungizid und/oder Bakterizid, nach Anspruch 1 oder 2, enthaltend genau ein in Wasser unlösliches, anorganisches Kupfersalz, wobei der Einsatz von Kupferhydroxid besonders bevorzugt ist.

5. Fungizid und/oder Bakterizid, nach einem der vorhergehenden Ansprüche, wobei das Gewichtsverhältnis von Chitosan zu Kupfer aus dem mindestens einen Kupfersalz 2:1-20, bevorzugt 1:1-10 und besonders bevorzugt 1:4-10, beträgt.

6. Fungizid und/oder Bakterizid, nach Anspruch 5, wobei das Chitosan in Form von fein dispergierbaren Partikeln vorliegt, wobei die Partikel eine mittlere Partikelgröße in einem einstelligen bis zu einem niedrigen zweistelligen Mikrometer-Bereich aufweisen, die eine dispergierbare Spritzlösung ermöglichen.

7. Fungizid und/oder Bakterizid nach einem der vorhergehenden Ansprüche, wobei das Chitosan und das mindestens eine Kupfersalz in einem Suspensionskonzentrat, benetzbarem Pulver, Öldispersion, Suspoemulsion oder wasserdispergierbarem Granulat vorliegen.

8. Fungizid und/oder Bakterizid, nach Anspruch 7, wobei der Massenanteil des Chitosans und des mindestens einen Kupfersalzes zusammen an dem Fungizid insgesamt 5 - 50 %, bevorzugt 10 - 40 % und besonders bevorzugt 20 - 30 % für eine flüssige Formulierung und 20-95 %, bevorzugt 30-85 % und besonders bevorzugt 50 - 80 % für eine feste Formulierung beträgt.

9. Fungizid und/oder Bakterizid nach einem der vorhergehenden Ansprüche, wobei das Fungizid und/oder Bakterizid die Kombination von Tripolyphosphat als Formulierungshilfsstoff und von Chitosan im Gewichtsverhältnis 1 zu 1-5, bevorzugt 1 zu 3 enthält.

10. Fungizid und/oder Bakterizid nach einem der Ansprüche 1 bis 9, wobei das Fungizid und/oder Bakterizid die Kombination von Sulfat als Formulierungshilfsstoff und von Chitosan im Gewichtsverhältnis 1 zu 1-5, bevorzugt 1 zu 3 enthält.

11. Fungizid und/oder Bakterizid, nach einem der vorhergehenden Ansprüche, wobei das Mittel ausschließlich als Suspensionskonzentrat vorliegt und als Kupferkomponente Kupferhydroxid verwendet wird.

12. Verwendung des Fungizides nach einem der vorhergehenden Ansprüche zur Behandlung von Pflanzen, wobei das Fungizid wirksam ist zur Vorbeugung oder Behandlung von Blattseptoria, Schorf, Falschem Mehltau, Pfauenaugenkrankheit, Braunfäule, Rost, Schwarzfäule und echtem Mehltau.

13. Verwendung des Bakterizides nach einem der Ansprüche 1 bis 11 zur Behandlung von Pflanzen, wobei das Bakterizid wirksam ist zur Vorbeugung oder Behandlung von Pflanzenkrankheiten, die insbesondere durch Erwinia spp, Xanthomonas spp, Pseudomonas spp und Dickeya spp hervorgerufen werden.

14. Verfahren zur Kultivierung einer Kulturpflanze, insbesondere Getreidepflanze, Kernobst, Wein, Olive, Zitrus, Kaffee, Kakao, Gemüse und Nachtschatten, auf einer Kulturfläche, umfassend das Applizieren eines Fungizids/Bakterizids nach einem der Ansprüche 1 bis 11 auf die Kulturpflanze und/oder die Kulturfläche in einer Menge, die wirksam ist, um den Pilzbefall/Bakterienbefall der Kulturpflanze zu verhindern oder im Vergleich zu einer unbehandelten Kulturpflanze zu vermindern.

15. Verfahren nach Anspruch 14, wobei die Kulturpflanze ausgewählt ist aus den Gattungen Triticum, Secale, Hordeum, Oryza, Zea, Avena, Sorghum, Panicum, Pennisetum, Setaria, Eleusine, Eragrostis, Vitis und Solanum, sowie dem Untertribus Pyrinae. Olea, Citrus, Coffea, Theobroma, sowie Gattungen, denen Pflanzen zugeordnet werden, welche als Fruchtgemüse für den menschlichen Verzehr genutzt werden oder deren Organe, insbesondere Blatt, Stengel, Wurzel für den menschlichen Verzehr geeignet sind.

16. Verwendung eines Chitosan und mindestens ein Kupfersalz umfassenden Fungizids nach einem der vorhergehenden Ansprüche 1-11 zum Schutz von Kulturpflanzen, insbesondere Getreide, Wein, Kernobst und Nachtschatten, vor Pilzbefall und/oder Bakterienbefall.

## Claims

1. Fungicide and/or bactericide, comprising chitosan and at least one copper salt, the chitosan being present in a number-average degree of polymerization DPn of 30-1000, **characterized in that** the copper salt is inorganic and insoluble in water, **in that** the chitosan is in precipitated form and **in that** the chitosan is stabilized by addition of anionic formulating auxiliaries based on sulfate or phosphate, such as sodium sulfate, potassium sulfate, trisodium phosphate, tetrasodium diphosphate, pentasodium phosphate, to form dispersible particles.

2. Fungicide and/or bactericide, according to Claim 1, the degree of acetylation DA being 10-30%, preferably 15-25%, more preferably 18-22% and very preferably 20%.

3. Fungicide and/or bactericide, according to Claim 1 or 2, the at least one inorganic and water-insoluble copper salt being copper hydroxide (Cu(OH)₂), basic copper carbonate (xCuCO₃ * Cu(OH)₂), copper oxychloride (CuCl₂ * 3Cu(OH)₂), copper(I) oxide (Cu₂O) or Bordeaux mixture, copper hydroxide being particularly preferred.

4. Fungicide and/or bactericide, according to Claim 1 or 2, containing exactly one water-insoluble, inorganic copper salt, the use of copper hydroxide being particularly preferred.

5. Fungicide and/or bactericide, according to any of the preceding claims, the weight ratio of chitosan to copper from the at least one copper salt being 2:1-20, preferably 1:1-10 and more preferably 1:4-10.

6. Fungicide and/or bactericide, according to Claim 5, the chitosan being in the form of finely dispersible particles, the particles having an average particle size in a single-digit up to a low 2-digit micrometre range, which enable a dispersible spray solution.

7. Fungicide and/or bactericide according to any of the preceding claims, the chitosan and the at least one copper salt being present in a suspension concentrate, wettable powder, oil dispersion, suspoemulsion or water-dispersible granules.

8. Fungicide and/or bactericide, according to Claim 7, the mass fraction of the chitosan and of the at least one copper salt together in the fungicide being in total 5-50%, preferably 10-40% and more preferably 20-30% for a liquid formulation and 20-95%, preferably 30-85% and more preferably 50-80% for a solid formulation.

9. Fungicide and/or bactericide according to any of the preceding claims, the fungicide and/or bactericide comprising the combination of tripolyphosphate as formulating auxiliary and of chitosan in a weight ratio of 1:1-5, preferably 1:3.

10. Fungicide and/or bactericide according to any of Claims 1 to 9, the fungicide and/or bactericide comprising the combination of sulfate as formulating auxiliary and of chitosan in a weight ratio of 1:1-5, preferably 1:3.

11. Fungicide and/or bactericide, according to any of the preceding claims, the composition being present exclusively as a suspension concentrate and copper hydroxide being used as copper component.

12. Use of the fungicide according to any of the preceding claims for the treatment of plants, the fungicide being effective for the prevention or treatment of leaf Septoria, scab, downy mildew, peacock spot disease, brown rot, rust, black rot and powdery mildew.

13. Use of the bactericide according to any of Claims 1 to 11 for the treatment of plants, the bactericide being effective for the prevention or treatment of plant diseases caused in particular by Erwinia spp, Xanthomonas spp, Pseudomonas spp and Dickeya spp.

14. Method for cultivating a crop plant, more particularly cereal crop, pome fruit, vine, olive, citrus, coffee, cacao, vegetables and solanums, on a cultivation area, comprising the applying of a fungicide/bactericide according to any of Claims 1 to 11 to the crop plant and/or to the cultivation area in an amount which is effective to prevent fungal/bacterial infestation of the crop plant or to reduce it in comparison to an untreated crop plant.

15. Method according to Claim 14, the crop plant being selected from the genera Triticum, Secale, Hordeum, Oryza, Zea, Avena, Sorghum, Panicum, Pennisetum, Setaria, Eleusine, Eragrostis, Vitis and Solanum, and also from the subtribe Pyrinae, Olea, Citrus, Coffea, Theobroma, and also from genera which are assigned plants which are utilized as fruit vegetables for human consumption or whose organs, especially leaf, stem, root, are suitable for human consumption.

16. Use of a fungicide comprising chitosan and at least one copper salt, according to any of preceding Claims 1-11, for the protection of crop plants, more particularly cereals, vines, pome fruit and solanums, from fungal and/or bacterial infestation.

## Revendications

1. Fongicide et/ou bactéricide comprenant du chitosane et au moins un sel de cuivre, le chitosane présentant un degré de polymérisation moyen en nombre DPn de 30 à 1 000, **caractérisés en ce que** le sel de cuivre est inorganique et insoluble dans l'eau, que le chitosane est précipité et que le chitosane est stabilisé par addition d'adjuvants de formulation anioniques à base de sulfate ou de phosphate tels que le sulfate de sodium, le sulfate de potassium, le phosphate trisodique, le diphosphate tétrasodique, le phosphate pentasodique avec formation de particules dispersibles.

2. Fongicide et/ou bactéricide selon la revendication 1, dans lequel le degré d'acétylation DA est de 10 à 30 %, de préférence de 15 à 25 %, plus préférentiellement de 18 à 22 % et d'une manière particulièrement préférée de 20 %.

3. Fongicide et/ou bactéricide selon la revendication 1 ou 2, l'au moins un sel de cuivre inorganique et insoluble dans l'eau étant l'hydroxyde de cuivre (Cu(OH)₂), le carbonate basique de cuivre (xCuCO₃ * (Cu(OH)₂), l'oxychlorure de cuivre (CuCl₂ * 3Cu(OH)₂), l'oxyde de cuivre (I) (Cu₂O) ou la bouillie bordelaise, d'une manière particulièrement préférée l'hydroxyde de cuivre.

4. Fongicide et/ou bactéricide selon la revendication 1 ou 2, contenant exactement un sel de cuivre inorganique insoluble dans l'eau, l'utilisation d'hydroxyde de cuivre étant particulièrement préférée.

5. Fongicide et/ou bactéricide selon l'une des revendications précédentes, dans lesquels le rapport en poids du chitosane au cuivre de l'au moins un sel de cuivre est de 2:1-20, de préférence de 1:1-10 et d'une manière particulièrement préférée de 1:4-10.

6. Fongicide et/ou bactéricide selon la revendication 5, le chitosane se présentant sous forme de particules finement dispersibles, les particules ayant une granulométrie de quelques micromètres ou d'un petit nombre de dizaines de micromètres, qui rendent possible une solution dispersible pour pulvérisation.

7. Fongicide et/ou bactéricide selon l'une des revendications précédentes, le chitosane et l'au moins un sel de cuivre étant présents dans un concentré en suspension, une poudre mouillable, une dispersion huileuse, une suspo-émulsion ou un granulé dispersible dans l'eau.

8. Fongicide et/ou bactéricide selon la revendication 7, la proportion en masse du chitosane et de l'au moins un sel de cuivre, pris ensemble, par rapport au fongicide, est au total de 5 à 50 %, de préférence de 10 à 40 % et d'une manière particulièrement préférée de 20 à 30 % pour une formulation liquide et de 20 à 95 %, de préférence de 30 à 85 % et d'une manière particulièrement préférée de 50 à 80 % pour une formulation solide.

9. Fongicide et/ou bactéricide selon l'une des revendications précédentes, le fongicide et/ou le bactéricide contenant la combinaison d'un tripolyphosphate en tant qu'adjuvant de formulation et de chitosane selon une proportion en poids de 1:1-5, de préférence de 1:3.

10. Fongicide et/ou bactéricide selon l'une des revendications 1 à 9, le fongicide et/ou le bactéricide contenant la combinaison d'un sulfate en tant qu'adjuvant de formulation et de chitosane selon une proportion en poids de 1:1-5, de préférence de 1:3.

11. Fongicide et/ou bactéricide selon l'une des revendications précédentes, le produit se présentant exclusivement sous forme d'un concentré en suspension, et le composant cuivre utilisé étant l'hydroxyde de cuivre.

12. Utilisation du fongicide selon l'une des revendications précédentes pour le traitement de plantes, le fongicide ayant actif pour la prévention ou le traitement de la septoriose des feuilles, de la tavelure, du faux mildiou, de la maladie en œil de paon, de la pourriture brune, de la rouille, de la pourriture noire et du vrai mildiou.

13. Utilisation du bactéricide selon l'une des revendications 1 à 11 pour le traitement de plantes, le bactéricide étant actif pour la prévention ou le traitement de maladies des plantes qui sont provoquées en particulier par Erwinia spp, Xanthomonas spp, Pseudomonas spp et Dickeya spp.

14. Procédé de culture d'une plante de culture, en particulier d'une céréale, d'un fruit à pépins, de la vigne, de l'olivier, d'une agrume, d'un caféier, d'un cacaoyer, d'un légume et de morelle, sur une surface cultivée, comprenant l'application d'un fongicide/bactéricide selon l'une des revendications 1 à 11 sur la plante de culture et/ou la surface cultivée en une quantité qui est active pour empêcher une infestation fongique/une infestation bactérienne de la plante de culture ou pour la diminuer par comparaison avec une plante de culture non traitée.

15. Procédé selon la revendication 14, la plante de culture étant choisie parmi les genres Triticum, Secale, Hordeum, Oryza, Zea, Avena, Sorghum, Panicum, Pennisetum, Setaria, Eleusine, Eragrostis, Vitis et Solanum, ainsi que les sous-tribus Pyrinae, Olea, Citrus, Coffea, Theobroma, ainsi que les genres auxquels sont affectées les plantes qui sont utilisées comme légumes-fruits pour la consommation humaine ou dont les organes, en particulier la feuille, la tige, la racine, conviennent à la consommation humaine.

16. Utilisation d'un chitosane et d'au moins un fongicide comprenant un sel de cuivre selon l'une des revendications précédentes 1-11, pour la protection de plantes de culture, en particulier des céréales, de la vigne, des fruits à pépins et de la morelle, vis-à-vis d'une infestation fongique et/ou d'une infestation bactérienne.
